# EUROPEAN PATENT SPECIFICATION

(11) **EP 1 125 976 B1**
(45) Date of publication and mention of the grant of the patent: **09.11.2005**
(21) Application number: 01301321.4
(22) Date of filing: 15.02.2001
(51) Int. Cl.: C08K 5/3415, C08L 21/00, B60C 15/06

(54) **Chafer rubber composition, and heavy duty pneumatic tyre using the chafer rubber composition**
Wulstgummimischung und LKW-Reifen mit dieser Wulstgummimischung
Composition de caoutchouc pour talon et bandage pneumatique pour poids-lourds fabriqué à partir de cette composition

(30) Priority: 16.02.2000 JP 2000037932
(43) Date of publication of application: 22.08.2001
(73) Proprietor: Sumitomo Rubber Industries Ltd., Kobe-shi, Hyogo-ken (JP)
(72) Inventor: Mizuno,Yoichi, c/o Sumitomo Rubber Industries Ltd., Kobe-shi, Hyogo-ken (JP)
(74) Representative: Manitz, Finsterwald & Partner GbR

(56) References cited:
- EP-A- 0 645 424
- EP-A- 0 709 234
- EP-A- 0 823 453

## Description

The present invention relates to a rubber composition for a chafer used in a bead portion of a pneumatic tyre, in particular a heavy duty pneumatic tyre, and a heavy duty pneumatic tyre employing the rubber composition for a chafer.

### Description of the Background Art

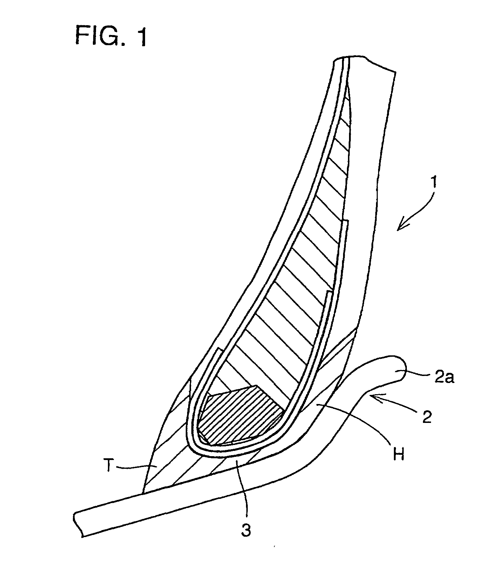

In a bead portion of a tyre directly engaging with a rim, a chafer is often provided to prevent exposure of a tyre reinforcing element due to abrasion of the bead portion, to strengthen the engagement between the tyre and the rim, and further, in the case of a tubeless tyre, to maintain a constant internal air pressure. Referring to Fig. 1, the chafer 3 is placed at the bead portion 1 to directly face the rim and extends from a bead toe portion T through a bead heel portion H to reach a region opposing an upper end 2a of the rim flange 2. Particularly for the chafer of a heavy duty pneumatic tyre that undergoes repeated severe deformation and highly exothermic conditions under a high internal pressure and heavy load, the following characteristics are required.
(1) Rim-Slippage Resistance
   A tyre in running undergoes repeated deformation, which causes friction between the chafer and the rim sheet or rim flange. Especially, a pneumatic tyre for heavy-duty vehicle is subjected to heavy load as well as a severe temperature increase, and therefore, resistance to abrasion is a critical issue.
(2) Creep Resistance
   When under high internal pressure and heavy load, the chafer receives a strong compressive stress from the rim flange and bead, and tends to suffer creep strain. This leads to stress strain of a bead reinforcing element, thereby causing breakage in the bead portion. Therefore, a rubber composition resistant to creep is demanded.
(3) Toe-Cracking Resistance

When mounting/dismounting a heavy duty pneumatic tyre, in particular a tubeless tyre, to/from a rim, the chafer toe portion suffers local deformation, which may cause the toe portion to crack. Such toe cracking leads to considerable deterioration of tyre durability, and, in the case of the tubeless tyre, the internal pressure retaining performance is degraded. A rubber composition improved in the creep resistance as described above, however, normally is poor in toe-cracking resistance.

As one of the conventional chafer rubber compositions, a highly rigid rubber composition is disclosed in Japanese Patent Laying-Open No. 7-118444, in which a filler and sulphur are blended into polybutadiene rubber containing a syndiotactic crystal component. EP-A-0 645 424 also discloses a chafer rubber composition comprising a butadiene rubber component containing syndiotactic crystals and a specific carbon black filler. The techniques disclosed therein, however, do not satisfy all the characteristics required for a chafer as described above. Further, in Japanese Patent Laying-Open No. 7-81335, a compound rubber chafer is disclosed, which is made of several kinds of rubber with different characteristics connected and unitised together. With this technique, however, the process of connecting and unitising several kinds of rubber requires large workload and cost.

### SUMMARY OF THE INVENTION

An object of the present invention is to provide a pneumatic tyre, in particular a heavy duty pneumatic tyre, which satisfies desired resistance to creep and toe-cracking at the same time, has rim-slippage resistance of the bead portion improved through its lifetime from the beginning to the end of running, thereby ensuring improved durability of the bead portion, and further, in the case of a tubeless tyre, exhibits good air-tightness to maintain the internal pressure.

According to an aspect of the present invention of claim 1, the rubber composition for a chafer is characterised in that 55-75 parts by weight of carbon black having a nitrogen adsorption specific surface area of 70-120 m²/g and 0.2-0.5 parts by weight of 1, 3-bis (citraconimidomethyl) benzene, and sulphur and vulcanisation accelerator are blended into the rubber composition in a ratio S/A of from 0.25 to 0.5, wherein S is the blended amount of the sulphur and A is the blended amount of the vulcanisation accelerator are blended with respect to 100 parts by weight of a rubber component containing 30-50 parts by weight of natural rubber and/or polyisoprene rubber and 50-70 parts by weight of polybutadiene rubber with a syndiotactic crystal content of at least 5% by weight.

According to another aspect of the present invention of claim 2, a heavy duty pneumatic tyre is characterised in that it employs in its bead portion the chafer rubber composition described above.

The foregoing and other objects, features, aspects and advantages of the present invention will become more apparent from the following detailed description of the present invention when taken in conjunction with the accompanying drawing.

### BRIEF DESCRIPTION OF THE DRAWINGS

Fig. 1 is a cross sectional view of a bead portion of a tyre for heavy-duty vehicle that is mounted on a rim.

### DESCRIPTION OF THE PREFERRED EMBODIMENTS

The rubber component for use in the present invention includes 30-50 parts by weight of natural rubber and/or polyisoprene rubber and 50-70 parts by weight of polybutadiene rubber.

The chafer repeatedly undergoes severe deformation when the tyre is under a high internal pressure and heavy load, and the temperature of the chafer tends to be increased further due to friction with the rim. Thus, it is necessary to maintain its toe-cracking resistance and rim-slippage resistance by restricting its heat generation as well as increasing its tensile strength and elongation. To this end, at least 30 parts by weight of natural rubber and/or polyisoprene rubber is included in the rubber component. If it exceeds 50 parts by weight, however, a sufficient level of hardness required for the chafer cannot be obtained.

As the polybutadiene rubber for use in the present invention, high cis-polybutadiene rubber whose cis content is at least 60% by weight, low cis-polybutadiene rubber whose cis content is less than 60% by weight, and vinyl polybutadiene rubber whose vinyl content is at least 20% by weight can be employed. The polybutadiene rubber includes at least 5% by weight of syndiotactic 1, 2 polybutadiene crystal (hereinafter, referred to as "syndiotactic crystal") is preferable. If the weight of the polybutadiene rubber is less than 50 parts by weight, rubber hardness becomes poor, so that the rim-slippage resistance is degraded. On the other hand, if it exceeds 70 parts by weight, adhesion to the inner-layer rubber of the bead portion becomes poor, and further, its roll processibility is degraded and its exothermic property is increased.

The polybutadiene rubber has a syndiotactic crystal content of at least 5% by weight, preferably at least 10% by weight. If it is less than 5% by weight, it becomes necessary to blend a large amount of carbon black and/or sulphur in the rubber composition; otherwise, sufficient hardness and rigidity as well as a high level of rim-slippage resistance cannot be expected. Examples of the polybutadiene rubber containing desirable syndiotactic crystal include VCR 303, VCR 412 and VCR 617 manufactured by Ube Industries. Ltd. In the rubber composition of the present invention, styrene-butadiene copolymer rubber, butyl rubber, ethylene-propylene rubber or the like may be blended as another rubber component, in a blended amount not greater than 10 parts by weight.

The carbon black for use in the present invention has a nitrogen adsorption specific surface area of 70 to 120 m²/g. If it is less than 70 m²/g, the reinforcing effect is insufficient, so that desired abrasion resistance as well as hardness and rigidity cannot be expected for the rubber composition. On the other hand, if it exceeds 120 m²/g, the exothermic property of the rubber composition increases, so that the rim-slippage resistance is degraded. Here, the nitrogen adsorption specific surface area is measured by the BET method according to ASTMD 3037-81. The carbon black is blended 55-75 parts by weight with respect to 100 parts by weight of the rubber component. If it is less than 55 parts by weight, the reinforcing effect is insufficient, and the levels of hardness and rigidity remain low. If it exceeds 75 parts by weight, the exothermic property increases and elongation at break decreases, so that the toe-cracking resistance is degraded.

In the rubber composition of the present invention, 1, 3-bis (citraconimidomethyl) benzene is blended at 0.2-0.5 parts by weight with respect to 100 parts by weight of the rubber component. By using 1,3-bis (citraconimidomethyl) benzene, reversion not only at vulcanisation in the mould but also due to heat generation in running of the tyre can be restricted. When a vulcanised rubber undergoes thermal hysteresis, the polysulfide bonds are broken, bonding and crosslinking take place again, so that the vulcanised rubber becomes harder. This considerably degrades the strength of the rubber.

Here, the 1, 3-bis (citraconimidomethyl) benzene helps, by virtue of Diels-Alder reaction, formation of crosslinks after the break of sulphur bonds. The crosslinks thus obtained maintain flexibility of the same level as in the sulphur bonds and exhibit heat resistance of a higher level.

If the blended amount of the 1, 3-bis (citraconimidomethyl) benzene is less than 0.2 parts by weight, the effects as described above cannot be expected. If it exceeds 0.5 parts by weight, the effects enter a saturated state, which is economically disadvantageous.

In the present invention, the ratio S/A of the blended amounts of sulphur S and vulcanisation accelerator A is in a range between 0.25 and 0.5.

In general, a vulcanised rubber of the sulphur vulcanised type that is formed of sulphur and vulcanisation accelerator is poor in thermostability as it is formed primarily of the polysulfide crosslinks. Thus, in the present invention, the blended amount of sulphur is preferably made smaller compared to the blended amount of vulcanisation accelerator so as to limit the number of sulphur per unit crosslinks, thereby restricting the formation of the polysulfide crosslinks. If the ratio S/A of the blended amounts thereof is less than 0.25, the crosslinking density becomes too small, and therefore, the required strength cannot be obtained. If it exceeds 0.5, however, the thermostability tends to be degraded. The blended amount of sulphur is preferably 0.3-2.0 parts by weight with respect to 100 parts by weight of the rubber component. If it is less than 0.3 parts by weight, the crosslinking density becomes too small. If it exceeds 2.0 parts by weight, the vulcanised rubber becomes too hard. The vulcanisation accelerator for use in the present invention may be any of commonly used vulcanisation accelerators, such as mercaptobenzothiazole, dibenzothiazyldisulfide, N-cyclohexylbenzothiazylsulfenamide, and N-tert-butyl-2-benzothiazolylsulfenamide. The blended amount of vulcanisation accelerator is normally 0.3-5.0 parts by weight with respect to 100 parts by weight of rubber component, although it varies dependent on the blended amount of sulphur.

In the rubber composition of the present invention, ingredients commonly used for a tyre rubber composition, e.g., silica, silane coupling agent, oil and wax, are blended as necessary.

### EXAMPLES

Ingredients as shown in Table 1 except for sulphur and vulcanisation accelerator were blended and kneaded in a Banbury mixer at about 150°C for five minutes. The sulphur and vulcanisation accelerator were added to the obtained rubber composition, and it was further kneaded in a biaxial open roll at about 80°C for five minutes.

The rubber composition thus obtained was used to mould a chafer divided into six portions in a circumferential direction of the tyre. It was then vulcanised under the condition of 196N at 150°C for 30 minutes. A truck tyre of a size of 11R22.5 was thus manufactured.

Specifications of various kinds of carbon black employed in the ingredients are shown in Table 2.

**Table 1**

| Ingredients | parts by weight |
|---|---|
| Rubber component | 100 |
| Carbon black | Variable |
| 1,3-bis(citraconimidomethyl)benzene *2) | Variable |
| Sulphur *3) | Variable |
| Vulcanisation accelerator *4) | Variable |
| Process oil *5) | 4 |
| Antioxidant *6) | 3 |
| Wax *7) | 2 |
| Stearic acid *8) | 1 |
| Zinc oxide (Zinc white) *9) | 5 |

**Table 2**

| | Manufacturer | Trade name | Nitrogen Adsorption Specific Surface Area (m²/g) |
|---|---|---|---|
| Carbon black N220 | Mitsubishi Chemical Corporation | Diablack I (N220) | 114 |
| Carbon black N330 | Tokai Carbon Co., Ltd. | Seast N (N330) | 74 |
| Carbon black N110 | Tokai Carbon Co., Ltd. | Beast 9 (N110) | 142 |
| Carbon black N550 | Showa Cabot K. K. | Sho Black (N550) | 42 |

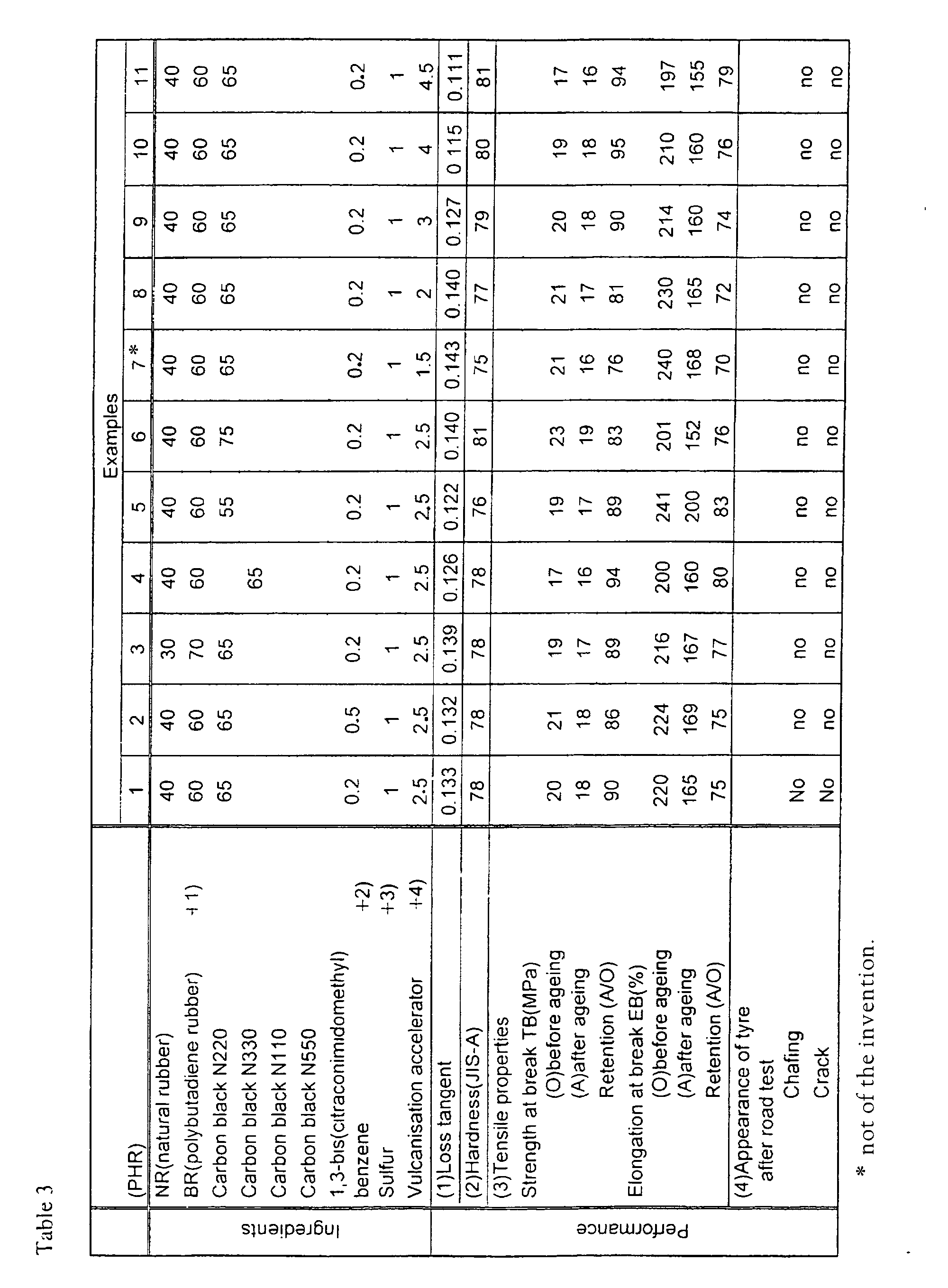

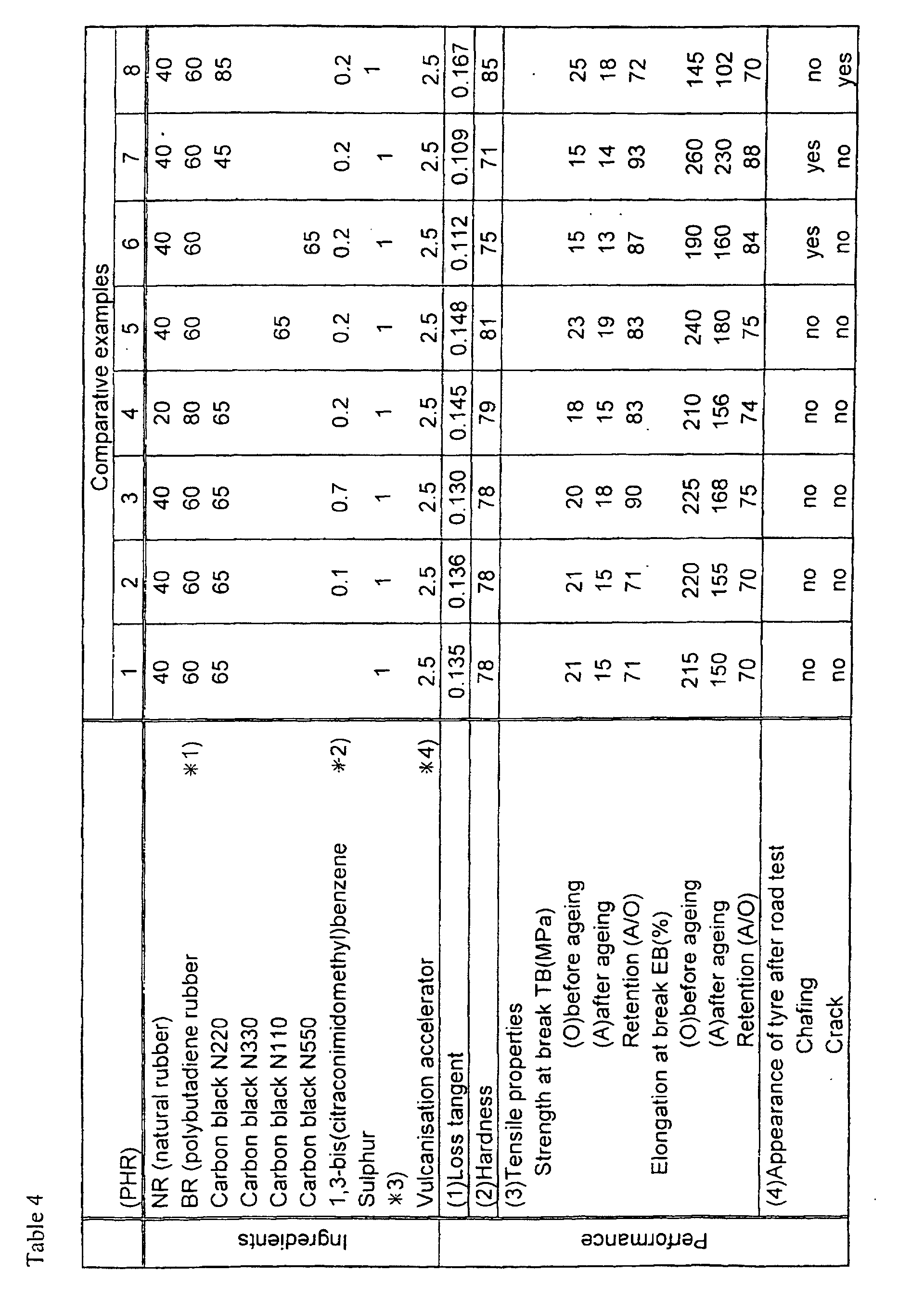

### Details of the ingredients shown in Tables 1, 3 and 4 are as follows:

*1) Polybutadiene: VCR 412 (from Ube Industries, Ltd.), syndiotactic crystal content: 12% by weight
*2) 1. 3-bis (citraconimidomethyl) benzene: Perkalink 900 (from Flexsys)
*3) Sulphur: Sulphur (from Tsurumi Chemical Industry Co., Ltd.)
*4) Vulcanisation accelerator: Nocceler NS (N-tert-butyl-2-benzothiazolylsulfenamide) (from Ouchishinko Chemical Industrial Co., Ltd.)
*5) Process oil: Diana Process AH40 (from Idemitsu Kosan Co., Ltd.)
*6) Antioxidant: Ozonon 6C (from Seiko Chemical Co., Ltd.)
*7) Wax: Sannoc Wax (from Ouchishinko Chemical Industrial Co.. Ltd.)
*8) Stearic acid: Kiri (from NOF Corporation)
*9) Zinc oxide: Ginrei R (from Toho Zinc Co., Ltd.)

Performance evaluation methods used to test the chafer rubber composition of the present invention and the tyre using the chafer rubber composition were as follows.

### (1) Loss Tangent (Viscoelasticity Test)

A test sample was obtained from a chafer rubber composition of a new tyre. The loss tangent (tanδ) at 60°C was measured using a viscoelasticity spectrometer manufactured by Iwamoto Co., Ltd., under the conditions of dynamic strain of 1.0% and at a frequency of 10Hz. The smaller value shows a lower tanδ, which corresponds to lower exothermic property, and hence, better performance and better rolling resistance.

### (2) Hardness (JIS-A)

The hardness of new tyre tread rubber was measured at 25°C using a JIS-A hardness tester.

### (3) Tensile Test

A test sample was obtained from the chafer rubber composition of a new tyre, for which the tensile test was conducted using a #3 dumbbell according to JIS-K 6251 to measure strength at break TB and elongation at break EB. (O) show the properties of the test sample before being subjected to an ageing process, and (A) show the properties of the test sample after it has undergone the ageing process in an oven at 80°C for 100 hours. The retention is represented as (A)/(O) x 100(%). The larger value indicates a better result with a smaller property change observed.

### (4) Road Test

The tyre provided with the divided chafer was mounted on a 10-t truck. The appearance of the tyre after running 200 thousand kilometres was examined. A visual check was made to determine presence/absence of chafing and crack.

The evaluation results for Examples are shown in Table 3, and those for Comparative examples are shown in Table 4.

### Evaluation Results

Comparative examples 1-3 and Examples 1 and 2 show that the addition of 1, 3-bis (citraconimidomethyl) benzene helped improve tensile properties after ageing. The performance improved when it was blended in an amount of 0.2-0.5 parts by weight, while further improvement was not observed if the blended amount exceeds 0.5 parts by weight.

Comparative example 4 and Examples 1 and 3 show that the tensile properties were degraded when the blended amount of polybutadiene rubber exceeded 70 parts by weight, as the loss tangent (tanδ) increased and the exothermic property deteriorated.

Comparative examples 5 and 6 and Examples 1 and 4 show that the exothermic property deteriorated when carbon black N110 having a large nitrogen adsorption specific surface area was utilised. They also show that chafing occurred when utilising carbon black N550 whose nitrogen adsorption specific surface area was small, due to the insufficient rigidity.

Comparative examples 7 and 8 and Examples 1, 5 and 6 show that the blended amount of carbon black in the range of 55-75 parts by weight is desirable. If it is less than 55 parts by weight, the rigidity becomes small, thereby causing chafing to occur. If it exceeds 75 parts by weight, the exothermic property increases, so that crack appears.

Examples 1 and 7-11 show that, for the vulcanised rubber compositions, the ratio of sulphur to vulcanisation accelerator blended therein is preferably less than 0.5, and, from the standpoint of the initial physical properties, it is preferably larger than 0.25.

As explained above, the rubber composition for chafer according to the present invention includes specific rubber components, and a prescribed amount of 1, 3-bis (citraconimidomethyl) benzene is blended into the carbon black blended type composition. Accordingly, it is possible to improve the fundamental characteristics of a chafer, i.e., rim-slippage resistance, creep resistance and toe-cracking resistance, totally in a well-balanced manner.

## Claims

1. A rubber composition for chafer, **characterised in that** 55-75 parts by weight of carbon black having a nitrogen adsorption specific surface area of 70-120 m²/g, 0.2-0.5 parts by weight of 1,3-bis (citraconimidomethyl) benzene, and sulphur S and vulcanisation accelerator A with the ratio S/A of from 0.25 to 0.5 are blended with respect to 100 parts by weight of a rubber component including 30-50 parts by weight of natural rubber and/or polyisoprene rubber and 50-70 parts by weight of polybutadiene rubber with a syndiotactic crystal content of at least 5% by weight.

2. A heavy duty pneumatic tyre, **characterised in that** it employs in its bead protion the chafer rubber composition according to claim 1.

## Patentansprüche

1. Gummizusammensetzung für ein Wulstband, **dadurch gekennzeichnet, dass** 55-75 Gew.-% Ruß mit einer per Stickstoffadsorption gemessenen spezifischen Oberfläche von 70-120 m²/g, 0,2-0,5 Gew.-% 1,3-Bis(Citraconimidomethyl)benzol sowie Schwefel S und Vulkanisationsbeschleuniger A mit einem Verhältnis S/A zwischen 0,25 und 0,5 bezogen auf 100 Gew.-% einer Gummikomponente enthaltend 30-50 Gew.-% natürlichen Gummi und/oder Polyisopren-Gummi sowie 50-70 Gew.-% Polybutadien-Gummmi mit einem syndiotaktischen Kristallgehalt von wenigstens 5 Gew.-% miteinander vermischt werden.

2. Strapazierfähiger pneumatischer Reifen, **dadurch gekennzeichnet, dass** dieser in seinem Wulstabschnitt eine Wulstbandgummizusammensetzung gemäß Anspruch 1 enthält.

## Revendications

1. Composition de caoutchouc pour bandelette talon, **caractérisée en ce qu'**on mélange 55-75 parties en poids de noir de carbone ayant une surface spécifique d'adsorption d'azote de 70-120 m²/g, 0,2-0,5 partie en poids de 1,3-bis(citraconimidométhyl)benzène, et du soufre S et un accélérateur de vulcanisation A selon un rapport S/A de 0,25 à 0,5, pour 100 parties en poids d'un composant caoutchouc comprenant 30-50 parties en poids de caoutchouc naturel et/ou de caoutchouc de polyisoprène et 50-70 parties en poids de caoutchouc de polybutadiène ayant une teneur en cristal syndiotactique d'au moins 5 % en poids.

2. Pneumatique pour poids lourds **caractérisé en ce qu'**il emploie, dans sa partie de talon, la composition de caoutchouc pour bandelette talon selon la revendication 1.
